(19) **Europäisches Patentamt**

**European Patent Office**

**Office européen des brevets**

(11) **EP 1 643 098 A1**

(12) **DEMANDE DE BREVET EUROPEEN**

(43) Date de publication:
**05.04.2006 Bulletin 2006/14**

(51) Int Cl.:
*F02B 23/06* [(2006.01)]

(21) Numéro de dépôt: **05292072.5**

(22) Date de dépôt: **04.10.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **04.10.2004 FR 0410442**

(71) Demandeur: **Renault s.a.s.**
**92100 Boulogne Billancourt (FR)**

(72) Inventeur: **Levy, Franck**
**91590 Guigneville (FR)**

(54) **Buse d'injection de carburant décentrée pour moteur de combustion de véhicule automobile**

(57) L'invention concerne une buse d'injection de carburant (3) destinée à être placée excentrée par rapport au bol (4) du piston (1) d'un cylindre de moteur automobile.

La buse est pourvue de trous d'injection répartis sur sa périphérie en n rangées sensiblement verticales, le nombre de trous de chaque rangée étant fonction du débit $Q_i$ d'une rangée, le débit et la position de chaque rangée par rapport au bol étant choisis tels que :

$$\frac{Q_i}{S_i} = C \ \text{ et } \ Q_i = \frac{d_i \times Q_e}{r},$$

où C = Q/S, avec Q : débit total souhaité de carburant pour un moteur de puissance donnée, S : surface projetée du bol,

$$Q_e = Q/n,$$

r : rayon du bol,
$d_i$ : longueur d'un jet de carburant issu de la rangée de trous considérée jusqu'à la paroi du bol,
$S_i$ : surface projetée dans le bol entre deux rangées consécutives dans le sens de tourbillonnement de l'air dans le bol.

FIG.1

Printed by Jouve, 75001 PARIS (FR)

**Description**

L'invention concerne une buse d'injection de carburant destinée à être placée excentrée par rapport au bol d'un piston de moteur à combustion de véhicule automobile.

Généralement, au niveau d'une chambre de combustion d'un moteur à combustion interne, la buse d'injection de carburant est placée au centre du bol du piston formant la partie inférieure de la chambre à combustion. Une injection homogène du carburant dans le bol est ainsi obtenue, tel que décrit par exemple dans le document US-6 553 960.

Dans certains moteurs de véhicule automobile, par exemple dans les moteurs comportant deux soupapes par cylindre (tels que des moteurs diesel à rampe commune d'injection), l'injecteur de carburant est décentré par rapport à l'axe du cylindre afin de permettre l'implantation de soupapes de grand diamètre. Afin d'éviter un trop fort désaxage de l'injecteur par rapport au bol du piston, ce dernier est également décentré par rapport à l'axe du cylindre. La proximité du bord du piston, et notamment des segments et galeries, contraint toutefois fortement le dessin du bol, de sorte que si l'on souhaite augmenter les dimensions du bol, il est nécessaire de le décentrer par rapport à l'injecteur. La dissymétrie du bol par rapport à l'injecteur conduit alors à une dissymétrie de la répartition des richesses (rapport air/carburant).

Il existe donc un besoin de réaliser de manière simple une buse dont la répartition des trous permette une distribution homogène du carburant dans le bol du piston, pour une position excentrée de la buse par rapport au bol.

A cet effet, l'objet de l'invention concerne une buse d'injection de carburant destinée à être placée excentrée par rapport au bol du piston d'un cylindre de moteur automobile, la buse étant pourvue d'une pluralité de trous d'injection, caractérisée en ce que les trous d'injection de la buse sont répartis sur la périphérie de la buse en n rangées sensiblement verticales, le nombre de trous de chaque rangée étant fonction du débit $Q_i$ d'une rangée, le débit de chaque rangée et la position de chaque rangée par rapport au bol étant choisis de manière à vérifier les relations suivantes :

$$\frac{Q_i}{S_i} = C \text{ et } Q_i = \frac{d_i \times Q_e}{r},$$

où $C = Q/S$, $Q$ représentant le débit total souhaité de carburant pour un moteur de puissance donnée, et $S$ la surface projetée du bol, $Q_e = Q/n$, $r$ est le rayon du bol, $d_i$ est la longueur d'un jet de carburant issu de la rangée de trous considérée jusqu'à la paroi du bol, $S_i$ est la surface projetée dans le bol entre la rangée de débit $Q_i$ et la rangée suivante dans le sens de tourbillonnement de l'air dans le bol.

Avantageusement, le diamètre d'au moins un trou de chaque rangée est sensiblement égal au diamètre minimal de fabrication. La pulvérisation du carburant en sera ainsi améliorée.

Avantageusement, le diamètre d'au moins un trou de chaque rangée est sensiblement égal au diamètre minimal d'encrassement.

Avantageusement, le nombre de trous dans chaque rangée est choisi de manière à ce que le plus grand nombre de trous présentent un diamètre sensiblement égal au diamètre minimal de fabrication et/ou d'encrassement. Cette configuration permet d'améliorer davantage encore la pulvérisation du carburant.

Avantageusement, sur la buse, les trous d'une rangée sont situés l'un au dessus de l'autre ou en quinconce. De préférence, la configuration choisie permet de placer le plus grand nombre de trous de diamètre sensiblement égal au diamètre minimal de fabrication et/ou d'encrassement.

Plus particulièrement, les diamètres des trous peuvent être variables dans une même rangée ou d'une rangée à l'autre. Cela peut être le cas pour ajuster le débit global de la rangée au débit déterminé $Qi$.

L'invention concerne également un ensemble formé du cylindre d'un moteur à combustion interne et du système d'injection de carburant associé, le cylindre comportant un piston dans lequel est formé un bol, et dans lequel le système d'injection est pourvu d'une buse selon l'invention, la buse étant excentrée par rapport à l'axe du bol. L'axe du bol peut également être excentré par rapport à l'axe du cylindre.

L'invention est maintenant décrite en référence aux dessins annexés, non limitatifs, dans lesquels :

-   les figures 1 et 2 sont respectivement une vue en coupe axiale et une vue de dessus d'un piston à bol excentré et d'une buse selon l'invention ;
-   la figure 3 représente une vue de côté d'une buse selon l'invention, et les figures 4 et 5 représentent des coupes transversales selon les lignes A-A et B-B de la figure 3 respectivement,
-   la figure 6 représente la surface projetée du bol et les projections des jets de carburant issus de la buse représentée figure 3.

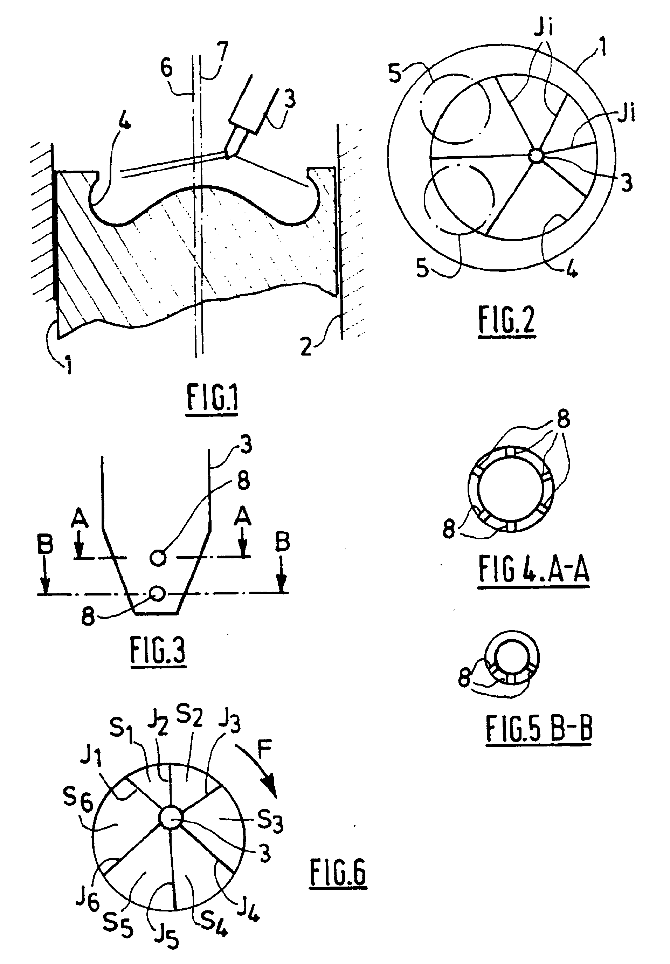

La figure 1 représente un ensemble formé d'un piston 1 cylindrique coulissant dans un cylindre 2 de moteur automobile, et une buse 3 d'injection de carburant faisant partie d'un système d'injection du carburant.

La partie supérieure du piston présente une cavité 4, appelé bol, formant la partie inférieure de la chambre de combustion associée au cylindre (non représentée). Dans l'exemple, la chambre de combustion présente deux soupapes de grand diamètre 5 pour l'admission et l'échappement de l'air. Ces soupapes sont représentées en traits discontinus sur la figure 2. Afin de ménager de la place pour ces soupapes, le bol 4 du piston est excentré par rapport à l'axe 6 du cylindre, et la buse 3 est excentrée par rapport à l'axe 7 du bol.

La buse présente n rangées sensiblement verticales de trous 8 pour l'injection du carburant dans la chambre. Les jets de carburant sont désignés par la référence $J_i$ ($1 \leq i \leq n$) sur la figure 2. Dans l'exemple, ces n rangées sont au nombre de 6.

On définit la surface projetée $S$ du bol dans un plan perpendiculaire à son axe, et $r$ son rayon, $S_i$ les surfaces projetées du bol dans ce même plan entre le jet $J_i$ issu d'une rangée i de trous et le jet $J_{i+1}$ issu de la rangée suivante dans la direction F de tourbillonnement de l'air dans le bol (figure 6).

Le débit de carburant total $Q$ injecté par la buse 3 est déterminé en fonction de la puissance souhaitée du moteur. Il est égal à la somme des débits $Q_i$ issus de chaque rangée i de trous.

La distance di représente la distance parcourue par le jet $J_i$ d'une rangée entre la buse et la paroi du bol.

Afin d'obtenir une répartition homogène du carburant injecté par la buse par rapport au bol, les trous 8 d'injection de la buse sont répartis sur la périphérie de la buse en n rangées sensiblement verticales, le nombre de trous de chaque rangée étant fonction du débit $Qi$ d'une rangée, le débit de chaque rangée et la position de chaque rangée par rapport au bol étant déterminés de manière à vérifier les relations suivantes :

$$\frac{Q_i}{S_i} = C \text{ et } Q_i = \frac{d_i \times Q_e}{r}, \text{ où } Q_e = Q/n \text{ et } C = Q/S.$$

Le débit de chaque rangée de trous est ainsi proportionnel à son éloignement de la paroi du bol à laquelle la rangée fait face, tandis que le rapport $Q_i/S_i$ reste constant, de sorte que le carburant est réparti de manière homogène autour de la buse. Ainsi, les rangées i, éloignées de la paroi du bol, devant présenter un plus grand débit de carburant, auront un nombre de trous 8 plus important que les rangées i proches de la paroi du bol.

De préférence, le nombre de trous dans chaque rangée est choisi de sorte que la rangée présente le plus grand nombre de trous dont le diamètre est sensiblement égal au diamètre minimal de fabrication. Ce diamètre est actuellement de l'ordre de 100 microns et correspond sensiblement à diamètre minimal en dessous duquel on observe un encrassement du trou.

Par exemple, une rangée de débit $Qi$ aura deux trous de diamètre minimal, sensiblement égal à 100 microns, et un troisième trou dont le diamètre sera un peu plus grand afin d'ajuster le débit total de la rangée au débit $Q_i$. On obtient ainsi toujours une bonne pulvérisation du carburant.

On procède par exemple de la manière suivante pour déterminer la position des rangées, leur débit et leur nombre de trous. Pour un débit de carburant $Q$ souhaité pour le moteur et pour une position excentrée donnée de la buse, on détermine le nombre n de rangées de trous puis leur position par rapport au bol en déterminant des sections $S_e$ de surface équivalente, correspondant à la surface projetée du bol entre deux jets de carburants consécutifs.

On suppose alors que chaque jet présente un débit $Q_e=Q/n$ et on en déduit une valeur corrigée du débit pour chaque rangée égale à

$$Q_i = \frac{d_i \times Q_e}{r}.$$

On en déduit les surfaces projetées corrigées $S_i$ entre deux jets consécutifs en appliquant la relation :

$$\frac{Q_i}{S_i} = C,$$ dans laquelle la constante C est égale à $Q_e/S_e$ ou $Q/S$.

La position des jets est ainsi corrigée. On peut éventuellement réajuster les débits $Q_i$ en fonction de la distance $d_i$ si la correction des positions des jets modifie cette distance.

Pour chaque rangée i de débit $Q_i$, les diamètres des trous 8 sont alors déterminés pour que la somme du débit de chaque trou soit égale à ce débit $Q_i$, le débit $Q_t$ de chaque trou étant calculé en utilisant la formule :

$$Q_t = Cd_t \times S_t \times \sqrt{\frac{2 \times (P_{amont} - P_{aval})}{\rho}}$$

où $Cd_t$ est le coefficient de décharge du trou, $S_t$ la section du trou, la masse volumique du fluide, et $P_{amont}$, $P_{aval}$, les pressions de fluide en amont et en aval du trou respectivement. Le débit de chaque trou est déterminé de manière à ce que le diamètre du trou soit le plus proche possible du diamètre défini plus haut.

Dans l'exemple représenté figures 3 à 5, trois rangées verticales présentent chacune deux trous, les trois autres ne présentant qu'un seul trou. Dans chaque rangée à deux trous, les trous sont superposés. Toutefois, pour un nombre de trous plus important, ou pour une buse de plus petite dimension, ces trous peuvent être légèrement en quinconce.

**Revendications**

1. Buse d'injection de carburant (3) destinée à être placée excentrée par rapport au bol (4) du piston (1) d'un cylindre de moteur automobile, la buse étant pourvue d'une pluralité de trous d'injection (8), **caractérisée en ce que** les trous d'injection (8) de la buse sont répartis sur la périphérie de la buse en n rangées sensiblement verticales, le nombre de trous de chaque rangée étant fonction du débit $Q_i$ d'une rangée, le débit de chaque rangée et la position de chaque rangée par rapport au bol étant choisis de manière à vérifier les relations suivantes :

$$\frac{Q_i}{S_i} = C \text{ et } Q_i = \frac{d_i \times Q_e}{r},$$

où C = Q/S, Q représentant le débit total souhaité de carburant pour un moteur de puissance donnée et S la surface projetée du bol, $Q_e$ = Q/n, r est le rayon du bol, di est la longueur d'un jet de carburant issu de la rangée de trous considérée jusqu'à la paroi du bol, $S_i$ est la surface projetée dans le bol entre la rangée de débit $Q_i$ et la rangée suivante dans le sens de tourbillonnement de l'air dans le bol.

2. Buse d'injection selon la revendication 1, **caractérisée en ce que** le diamètre d'au moins un trou (8) de chaque rangée est sensiblement égal au diamètre minimal de fabrication.

3. Buse d'injection selon la revendication 1 ou 2, **caractérisée en ce que** le diamètre d'au moins un trou (8) de chaque rangée est sensiblement égal au diamètre minimal d'encrassement.

4. Buse d'injection selon l'une des revendications 1 à 3, **caractérisée en ce que** le nombre de trous dans chaque rangée est choisi de manière à ce que le plus grand nombre de trous présentent un diamètre sensiblement égal au diamètre minimal de fabrication et/ou d'encrassement.

5. Buse d'injection selon l'une des revendications 1 à 4, **caractérisée en ce que**, sur la buse, les trous d'une rangée sont situés l'un au dessus de l'autre ou en quinconce.

6. Buse d'injection selon l'une des revendications 1 à 5, **caractérisée en ce que** les diamètres des trous sont variables dans une même rangée ou d'une rangée à l'autre.

7. Ensemble formé du cylindre (2) d'un moteur à combustion interne et du système d'injection de carburant associé, le cylindre comportant un piston (1) dans lequel est formé un bol (4), **caractérisé en ce que** le système d'injection est pourvu d'une buse (3) selon l'une des revendications 1 à 6, la buse étant excentrée par rapport à l'axe (7) du bol.

FIG.1

FIG.2

FIG.3

FIG 4.A-A

FIG.5 B-B

FIG.6

**EP 1 643 098 A1**

| | **Office européen des brevets** | **RAPPORT DE RECHERCHE EUROPEENNE** | **Numéro de la demande** EP 05 29 2072 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | PATENT ABSTRACTS OF JAPAN vol. 018, no. 592 (M-1702), 11 novembre 1994 (1994-11-11) & JP 06 221163 A (MAZDA MOTOR CORP), 9 août 1994 (1994-08-09) * abrégé; figures * | 1-7 | F02B23/06 |
| A | PATENT ABSTRACTS OF JAPAN vol. 012, no. 478 (M-775), 14 décembre 1988 (1988-12-14) & JP 63 201316 A (MAZDA MOTOR CORP), 19 août 1988 (1988-08-19) * abrégé; figures 1-4 * | 1-7 | |
| A,D | US 6 553 960 B1 (YOSHIKAWA SIGERU ET AL) 29 avril 2003 (2003-04-29) * le document en entier * | 1-7 | |
| A | US 4 733 643 A (ISHIDA ET AL) 29 mars 1988 (1988-03-29) * abrégé; figures 1-8 * | 1-7 | |
| A | EP 1 371 829 A (FUJI JUKOGYO KABUSHIKI KAISHA) 17 décembre 2003 (2003-12-17) * le document en entier * | 1-7 | DOMAINES TECHNIQUES RECHERCHES (IPC) F02M F02F F02B |
| A | PATENT ABSTRACTS OF JAPAN vol. 012, no. 466 (M-772), 7 décembre 1988 (1988-12-07) & JP 63 189612 A (MAZDA MOTOR CORP), 5 août 1988 (1988-08-05) * abrégé; figures 1,2 * | 1-7 | |

Le présent rapport a été établi pour toutes les revendications

| Lieu de la recherche | Date d'achèvement de la recherche | Examinateur |
|---|---|---|
| La Haye | 3 janvier 2006 | Blanc, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

ANNEXE AU RAPPORT DE RECHERCHE EUROPEENNE
RELATIF A LA DEMANDE DE BREVET EUROPEEN NO.

EP 05 29 2072

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-01-2006

| Document brevet cité au rapport de recherche | | Date de publication | Membre(s) de la famille de brevet(s) | | Date de publication |
|---|---|---|---|---|---|
| JP 06221163 | A | 09-08-1994 | AUCUN | | |
| JP 63201316 | A | 19-08-1988 | AUCUN | | |
| US 6553960 | B1 | 29-04-2003 | JP | 10288131 A | 27-10-1998 |
| US 4733643 | A | 29-03-1988 | AU | 586595 B2 | 13-07-1989 |
| | | | AU | 6569086 A | 04-06-1987 |
| | | | CN | 86108109 A | 05-08-1987 |
| | | | DE | 3674160 D1 | 18-10-1990 |
| | | | EP | 0225551 A2 | 16-06-1987 |
| EP 1371829 | A | 17-12-2003 | JP | 2004019456 A | 22-01-2004 |
| | | | US | 2003230275 A1 | 18-12-2003 |
| JP 63189612 | A | 05-08-1988 | AUCUN | | |

EPO FORM P0460